# EUROPÄISCHE PATENTANMELDUNG

(11) **EP 1 596 361 A2**
(43) Veröffentlichungstag der Anmeldung: **16.11.2005**
(21) Anmeldenummer: 05090134.7
(22) Anmeldetag: 11.05.2005
(51) Int. Cl.: G10K 11/162

(54) **Geformtes Schalldämmaterial und Verfahren zu seiner Herstellung**

(30) Priorität: 11.05.2004 DE 102004024249; 11.05.2004 DE 202004007869 U
(71) Anmelder: IGV Institut für Getreideverarbeitung GmbH, 14558 Bergholz-Rehbrücke (DE)
(72) Erfinder: Kretschmer, Thomas, 14558 Nuthetal OT Bergholz-Rehbrücke (DE); Lehrack, Uwe, 14471 Potsdam (DE); Volk, Jürgen, 14806 Belzig (DE)
(74) Vertreter: Gulde, Klaus W.

(57) **Zusammenfassung**

Die Erfindung betrifft ein geformtes Schalldämmmaterial und ein Verfahren zur Herstellung von diesen Schalldämmmaterialien.

Der vorliegenden Erfindung liegt die Aufgabe zugrunde, ein einfaches zu verbauendes bzw. als Einlage für Türen zu verwendendes geformtes Schalldämmmaterial aus überwiegend biopolymeren Rohstoffen zu schaffen, das trotz einer relativ geringen spezifischen Dichte im Verbund mit den Türmaterialien eine hohe Schalldämmung bewirkt.

Die Lösung der Aufgabe erfolgt mit einem geformten Schalldämmmaterial, enthaltend proteinhaltige, verschäumte Biopolymere, Pflanzenfasern oder teilmineralisierte Pflanzenfasern und Zuschlagsstoffe, und einem Verfahren zur Herstellung dieser Schalldämmmaterialien, wobei eine wässrige Suspension, enthaltend proteinhaltige, verschäumbare Biopolymere und feinkörnige anorganische Zuschlagsstoffe, hergestellt wird, diese Suspension verschäumt wird und anschließend Pflanzenfasern und grobkörnige synthetische oder natürliche Zuschlagsstoffe zugemischt werden, anschließend diese Masse geformt, getrocknet und anschließend die Oberflächenkruste mechanisch entfernt wird.

## Beschreibung

Die Erfindung betrifft ein geformtes Schalldämmmaterial, enthaltend proteinhaltige, verschäumte Biopolymere, Pflanzenfasern oder teilmineralisierte Pflanzenfasern, Zuschlagsstoffe und ein Verfahren zur Herstellung dieser Schalldämmmaterialien.

Schalldämmende Materialien dienen zur akustischen Trennung von Räumlichkeiten.

Lärm ist eine der größten und gleichzeitig am meisten unterschätzten Umweltbelastungen für die Menschen. Infolge der zunehmenden Lärmbelastung der Bevölkerung entstehen der Volkswirtschaft enorme Folgekosten. Dabei spielt sowohl der Schutz gegen Lärm von außen als auch der Schallschutz innerhalb des Hauses eine wichtige Rolle. Durch die unterschiedliche Art der Schallausbreitung sind auch unterschiedliche Methoden zur Schalldämmung erforderlich. Luftschall kann vor allem durch die Verwendung von schweren, massiven Konstruktionen gedämmt werden. Für die Hausmodernisierung sind auch mehrschichtige Leichtbauwände geeignet. Körperschall kann am besten durch einen mehrschichtigen Wand- oder Deckenaufbau gedämmt werden. Dabei wechseln sich schwere Schichten mit leichten, elastischen Schichten ab.

Die Bedeutung der verwendeten Rohstoffe wird in Türen neben dem Flächengewicht durch deren Biegesteifigkeit bestimmt. Sie ist für die Grenzfrequenz bestimmend. Kleine Grenzfrequenzen, bedingt durch "biegeweiche" Materialien, hohes Elastizitätsmodul (E_{dyn} in MN/m²) sind für eine gute Schalldämmung die Voraussetzung.

Da die Bauelemente in ihrem Gewicht immer mehr minimiert werden, ist es notwendig, den Schallschutz auch über andere technologische Maßnahmen zu realisieren, die auf Werkstoffe mit geringerer Flächendichte basieren. Schalldämmung kann mit Schallschluckstoffen, Körperschalldämmstoffen bzw. Dämmstoffen erzielt werden.

Ein Weg, mit spezifisch relativ leichten Materialien Schall zu dämmen, ist der Aufbau von Schichten unterschiedlicher Materialien bzw. gleicher Materialien, aber mit unterschiedlicher Struktur in den betreffenden Bauelementen sowie das Vermeiden von Schallbrücken.

Speziell für die Schalldämmung von Türen, insbesondere für Schallschutztüren wurden Materialien entwickelt, die den Schall mehr auf Basis der Struktur als durch das Flächengewicht dämmen können. Die Möglichkeit dazu ist gegeben, da das Schalldämmmaß eines Bauelementes vom Aufbau der Konstruktion bestimmt wird. Dabei wird ein schalltechnisches Zusammenwirken der verschiedenen Türschichten erzielt. Außerdem wird es durch das Schalllängsdämmmaß der angrenzenden Bauelemente beeinflusst.

In JP 2003106066 und JP 11210341 wird dafür ein spezieller Türenaufbau beschrieben.

In US 4924969 wird der Aufbau einer mit Metall verkleideten Tür beschrieben. Bei den in EP 0513605 und DE 3531802 beschriebenen Türen wird neben dem Schallschutz besonderen Wert auf gute Stabilität und Sicherheit gelegt.

Weiterhin werden verschiedene synthetische (z. B. EP 1321554 A1, EP 1347107 A1) und biopolymere Materialien beschrieben wie z. B. Baumwolle (CN 1143025), Hanf (EP 1314705 A2), die für das Herstellen von Schallschutzplatten/-materialien verwendet werden.

In der DE 195 17 950 C2 ist ein Verfahren zur Herstellung einer Stoffgemischmasse zur Ausformung von Gegenständen wie Blumen- Saattöpfe, Pflanzplatten, Gärschalen, Verpackungsformkörper, Dämmplatten sowie Floristikmaterial beschrieben. Das Verfahren ist im Wesentlichen dadurch gekennzeichnet, dass proteinhaltige Rohstoffe mit Wasser verschäumt werden, wobei in dem Schaum faserige Pflanzenteile, Wasserglas und weitere feinkörnige Rohstoffe wie Kalke, Tone, Lehme sowie Kieselgur zugesetzt werden. Die entstehende Masse wird geformt und bei höherer Temperatur getrocknet. Im Ergebnis entstehen Formkörper mit geschlossenporiger, krustenartiger Oberfläche und einer Dichte zwischen 0,4 bis 0,5 g/ml. Die so hergestellten geformten Materialien, wie z.B. Dämmplatten, eignen sich bedingt zum Einsatz als Wärmedämmplatten. Für den Einsatz als Schalldämmmaterialien sind diese Platten eher nicht geeignet, was Schalldämmmessungen ergeben haben.

Der vorliegenden Erfindung liegt die Aufgabe zugrunde, ein einfaches zu verbauendes oder als Einlage für Türen oder als Möbelplatte zu verwendendes geformtes Schalldämmmaterial aus überwiegend biopolymeren Rohstoffen zu schaffen, das trotz einer relativ geringen spezifischen Dichte im Verbund mit den Türmaterialien eine hohe Schalldämmung bewirkt.

Erfindungsgemäß erfolgt die Lösung der Aufgabe mit den Merkmalen der Ansprüche 1 und 12.

Vorteilhafte Weiterbildungen der Erfindung sind in den Unteransprüchen angegeben.

So enthält das erfindungsgemäße geformte Schalldämmmaterial proteinhaltige, verschäumte Biopolymere, Pflanzenfasern oder teilmineralisierte Pflanzenfasern und Zuschlagsstoffe und ist dadurch gekennzeichnet, dass die Formkörper sowohl im Randbereich als auch im Inneren eine offenporige Struktur aufweisen.

In einer Ausgestaltung der Erfindung enthält das Schalldämmmaterial mehrwertige, mit Wasser mischbare, einen Siedepunkt von über 150°C aufweisende Alkohole auf, wobei sich insbesondere der Gehalt an Glycerin vorteilhaft für physikalisch-mechanische Eigenschaften herausgestellt hat. So verbessert sich vorteilhafterweise die Biegefestigkeit der erfindungsgemäßen Schalldämmmaterialien.

In einer Weiterbildung sind in den geformten Schalldämmmaterialien grobkörnige synthetische oder natürliche Zuschlagsstoffe enthalten, wobei die Hauptmenge der grobkörnigen Zusätze eine Korngröße von ca. 0,5 bis 3 mm aufweist. Als Hauptmenge wird 60 bis 90 % der Gesamtmenge bezeichnet.

In einer weiteren Ausgestaltung der Erfindung sind proteinhaltige, verschäumte Biopolymere auf der Basis von Getreidemehlen, wie Roggenmehl mit einer Korngröße unter 0,5 mm enthalten.

Eine weitere Ausgestaltung sieht vor, dass als Pflanzenfasern Fasern aus Holz, Hanf, Leinen, Palmenblättern, Schilf, Flachs oder Xylit als teilmineralisierte Pflanzenfaser enthalten sind.

Gemäß einer weiteren Ausgestaltung sind als feinkörnige anorganische Zuschlagsstoffe Kalke, Kreide, Silikate, thermisch aktivierte Tone, Ziegelmehl oder Kaolin mit einer Korngröße unter 0,5 mm enthalten.

Eine weitere Ausgestaltung sieht vor, dass als grobkörnige synthetische oder natürliche Zuschlagsstoffe Kork oder Elastomere, wie elastische Biopolymere enthalten sind.

In einer weiteren Ausgestaltung des erfindungsgemäßen Schalldämmmaterials sind
a. 15 bis 70 Gew.% proteinhaltige, verschäumte Biopolymere,
b. 10 bis 50 Gew.% Pflanzenfasern oder teilmineralisierte Pflanzenfasern,
c. 1 bis 30 Gew.% feinkörnige anorganische Zuschlagsstoffe,
d. 1 bis 70 Gew.% grobkörnige synthetische oder natürliche Zuschlagsstoffe
enthalten.

In einer vorteilhaften Ausgestaltung enthält das geformte Schalldämmmaterial 10 bis 60 Gew.% mehrwertige, mit Wasser mischbare, einen Siedepunkt von über 150°C aufweisende Alkohole. Insbesondere hat sich der Zusatz von 10 bis 60 Gew.% Glycerin als für die Biegefestigkeit des Materials vorteilhaft herausgestellt.

Das erfindungsgemäße Verfahren zur Herstellung von Schalldämmmaterialien besteht darin, dass eine wässrige Suspension, bestehend aus proteinhaltigen, verschäumbaren Biopolymeren und feinkörnigen anorganischen Zuschlagsstoffen hergestellt wird, diese Suspension verschäumt wird, und anschließend Pflanzenfasern und grobkörnige synthetische oder natürliche Zuschlagsstoffe zugemischt werden. Danach wird diese Masse geformt, getrocknet und die sich normalerweise ausbildende Oberflächenkruste mechanisch entfernt wird.

Ein weiteres Herstellungsverfahren besteht darin, dass die wässrige Suspension, bestehend aus proteinhaltigen, verschäumbaren Biopolymeren, feinkörnigen anorganischen Zuschlagstoffen und ggf. einem mehrwertigen Alkohol, ohne verschäumt zu werden, mit den übrigen Materialbestandteilen gemischt wird, so dass ein Produkt mit anderer jedoch auch offenzelliger Porenstruktur entsteht.

Ein weiteres Herstellungsverfahren betrifft die Zumischung grobkörniger synthetischer oder natürlicher Zuschlagsstoffe, wie beispielsweise Elastomere und eine ebenfalls mechanische Oberflächenbehandlung zur Entfernung der Oberflächenkruste der getrockneten Formkörper.

Eine Weiterbildung der Erfindung sieht vor, der wässrigen Suspension vor dem Verschäumen mehrwertige, mit Wasser mischbare, einen Siedepunkt von über 150°C aufweisende Alkohole, wie Glycerin zuzusetzen. Die nach dem Trocknungsvorgang durchgeführte mechanische Oberflächenbehandlung dient der Herstellung einer offenporigen Struktur. Sie beseitigt die nach dem Trocknungsvorgang sich bildende Oberflächenkruste.

Vorteilhafterweise ist es möglich, aus den erfindungsgemäßen Materialien durch Formgebungsprozesse vor dem Trocknen oder nach dem Trocknen Formkörper für unterschiedliche Anwendungen herzustellen, die als wesentliche Eigenschaft ökologisch unbedenklich entsorgt werden können (z. B. Verrottung, Verbrennung).

Das Schalldämmmaterial wird verwendet als Schalldämmplatte zum Einbau in Türen, auch in Brandschutztüren, und Wänden, zur Trittschalldämmung und zur Geräuschdämmung an Maschinen sowie als Möbelplatte.

Das spezifische Gewicht der erfindungsgemäßen Materialien liegt im Bereich von 150 bis 400 kg/m³. Die Fasern in dem Material liegen in keiner geordneten Struktur vor. Das Material wird nach seiner Herstellung oberflächenbehandelt. Dadurch wird eine offenporige Struktur der Oberfläche erzielt. Sie ist mechanisch stabil und durch eine charakteristische Elastizität gekennzeichnet.

Diese ist jedoch so beschaffen, dass sie beim Einbau des Materials in einen Rahmen und einer nachfolgenden Kaschierung der Oberfläche (z.B. Verkleben mit einer Folie und nachfolgendem Anpressen) nicht hinderlich ist.

Es hat sich überraschend gezeigt, dass dieses Material in ein Bauelement, insbesondere in eine Tür eingebaut, trotz des geringen spezifischen Gewichtes zu einer guten Schalldämmung führt, die der konventioneller, spezifisch schwerer Materialien ähnlich ist. Die Inkooperation von Korkpartikeln und/oder Elastomerpartikeln erhöht diese Schalldämmung.

Der Einbau des erfindungsgemäßen Dämmmaterials in die Tür erfolgt als ein- oder mehrlagiges Sandwich.

Die Basis für das Verbundmaterial ist die Suspension des proteinhaltigen Biopolymers, wie z.B. Roggenmehl mit Wasser. Dieser Suspension können mineralische Additive wie Hydroxide, Silikate oder thermisch aktivierte Tone beigemischt werden.

Durch das mechanische Einbringen von Luft oder eines anderen Gases wird die spezifische Dichte der Suspension auf 150 bis 350 kg/m³ abgesenkt.

Der Feststoffanteil in dieser Suspension beträgt 20 bis 40 Gew.%. Hydroxide wie z. B. Kalk unterstützen den Auflockerungsprozess, wodurch eine weitere Reduzierung der spezifischen Dichte erfolgt.

In einem darauffolgenden Prozessschritt werden Pflanzenfasern, insbesondere Holzfasern oder teilmineralisierte Holzfasern in die leichte Suspension eingemischt. Diese Pflanzenfasern sind gekennzeichnet durch Längen von bis zu 50 mm bei einer Dicke bis zu 2mm. Besonders geeignet sind Fasern, die eine raue Oberfläche aufweisen, da dies einen Verfilzungseffekt bewirkt. Zum Erzielen einer ungeordneten Struktur und von Inhomogenitäten des Materials können weiterhin Kork- und/oder Elastomergranulate dazu gemischt werden.

Das Stoffgemisch wird zu Platten definierter Abmessung oder zu einem kontinuierlichen endlosen Band geformt. Die Fixierung der Struktur erfolgt durch thermische Behandlung.

Diese erfolgt in einem ersten Abschnitt in einer gesättigten Dampfatmosphäre (Taupunkt ca. 100°C) bzw. unter Sattdampf, bei einer Temperatur von 140 bis 240 °C einer Dauer von ca. 60 bis 120 min. In einem zweiten Schritt wird in einer relativ trockenen Atmosphäre (Taupunkt ca. 80°C) bei einer Temperatur von 80 bis 200 °C der Verbundwerkstoff bis auf einen Feuchteanteil von 15 bis 2 % getrocknet.

Während dieser thermischen Behandlung geht der Stärkebestandteil des proteinhaltigen Biopolymers vom kristallinen in den amorphen Zustand über. Dabei werden die Stärkekörner zerstört und bilden mit dem vorhandenen Wasser eine wässrige Phase, die sich um die weiteren Bestandteile der Stoffmischung legt. Bei der nachfolgenden thermischen Behandlung wird das Wasser dem Stoffgemisch entzogen. Die darin enthaltenen Stoffe verfestigen sich und bilden im Komplex mit den übrigen Partikeln des Stoffgemisches die Struktur. Die mineralischen Bestandteile verfestigen diese Struktur durch z. B. das Ausbilden von Bindungen mit den biopolymeren Bestandteilen (z.B. Kalk und Protein mittels Disulfidgruppen) oder durch die Einlagerung in diese Struktur. Die Verfestigung der silikatischen Bestandteile basiert auf der Ausbildung anorganischer, dreidimensionaler Netzwerke aus SiO₄-Tetraetern. Sie bilden quasi eine eigene feste Struktur. Nach diesem Prozess liegt ein mechanisch stabiles Dämmmaterial in Form einer definierten Platte oder eines endlosen Bandes vor. Zum Herstellen der schalldämmenden Einlage für die Schallschutztür erfolgt ein Kalibrieren der Oberflächen der Platte durch Schleifen oder Fräsen sowie der Zuschnitt entsprechend der notwendigen Abmessungen .

Das erfindungsgemäße Verfahren eignet sich auch für das Herstellen von Platten, die im Innenausbau (Hausbau) verwendet werden. Durch die Offenporigkeit des Materials ist es ebenfalls möglich, das Material für die Wasserretention als feuchtespeicherndes Material anzuwenden.

Anhand von mikroskopischen Aufnahmen wird deutlich gemacht, welche Wirkung die mechanische Oberflächenbehandlung hinsichtlich der Ausbildung einer auf die Gesamtplatte bezogene offenporige Struktur besitzt.

### Es zeigen

- Fig.1: eine mikroskopische Aufnahme der sich ausbildenden Oberflächenkruste nach dem Trocknungsvorgang,
- Fig.2: die Entstehung einer offenporigen Struktur nach erfolgter mechanischer Oberflächenbehandlung,
- Fig.3: die geschnittene Fläche einer Schalldämmplatte mit der verdichteten Oberflächenkruste, die erfindungsgemäß entfernt wird, um die überraschenden schalldämmenden Eigenschaften zu erzielen und
- Fig.4: in einer Schnittdarstellung die eingelagerten grobkörnigen Zuschlagsstoffe, in diesem Falle Gummigranulat in die offenporige Struktur der Platte.

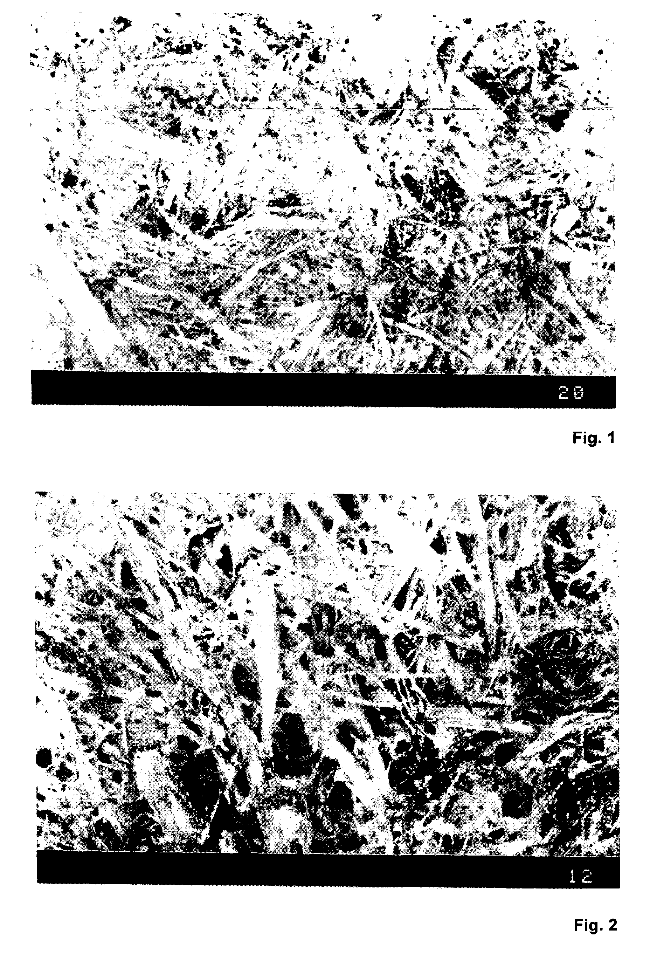

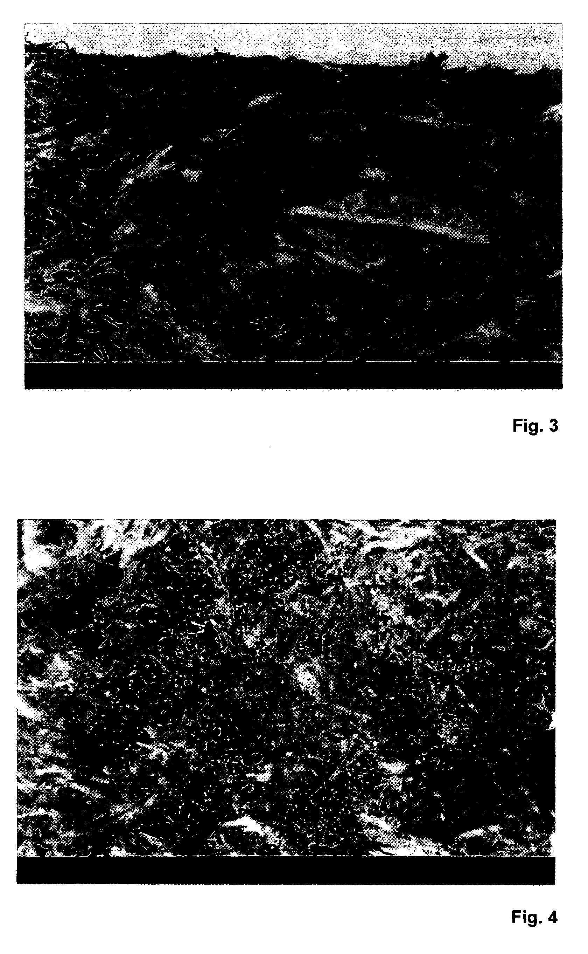

Die mikroskopischen Vergrößerungen von Fig.1 bis Fig.4 betragen 6,5 mal.

Die Erfindung wird an Hand von Ausführungsbeispielen näher erläutert.

### Beispiel 1

Eine aus 46 Gew.% Roggenmehl, 35 Gew.% Holzfasern, 0,7 Gew.% Kalk, 19 Gew.% Kreide bestehende Schalldämmplatte wird auf die Seitenmaße 1845 mm x 720 mm mittels Formatkreissäge geschnitten. Durch eine Breitbandschleifmaschine wird eine Plattendicke von 11 mm oder 17mm eingestellt. Die Oberflächen der Platte werden geschliffen oder gehobelt, so dass eine glatte aber offenporige Oberfläche erzielt wird. Mittels konventioneller in der Türenindustrie vorhandener Technik werden 2 Platten mit einer Dicke von 17 mm oder 3 Platten mit einer Dicke von 11 mm in den vorgefertigten Türenrahmen eingelegt.

Konventionell wird die Tür durch das Verkleben mit jeweils einer Hartfaserplatte an der Ober- und Unterseite sowie Furnier fertiggestellt.

Das fertige Türblatt (1985 x 860 x 40 mm) hat ein Gewicht kleiner 30 kg und eine Schalldämmung größer gleich 38 dB.

### Beispiel 2

Eine aus 26 Gew.% Roggenmehl, 17 Gew.% Holzfasern, 0,4 Gew.% Kalk, 57 Gew.% Gummi- oder Korkgranulat bestehende Platte wird auf die Seitenmaße 1845 mm x 720 mm mittels Formatkreissäge geschnitten. Durch eine Breitbandschleifmaschine wird eine Plattendicke von 11 mm oder 17mm eingestellt. Die Oberflächen der Platte werden geschliffen oder gehobelt, so dass eine glatte Oberfläche erzielt wird. Mittels konventioneller in der Türenindustrie vorhandener Technik werden 2 Platten mit einer Dicke von 17 mm oder 3 Platten mit einer Dicke von 11 mm in den vorgefertigten Türenrahmen eingelegt.

Konventionell wird die Tür durch das Verkleben mit jeweils einer Hartfaserplatte an der Ober- und Unterseite sowie Furnier fertiggestellt.

Das fertige Türblatt (1985 x 860 x 40 mm) hat ein Gewicht kleiner 35 kg und eine Schalldämmung größer gleich 39 dB.

### Beispiel 3

Es wird eine Suspension aus 15 Gew.% Roggenmehl, 75 Gew.% Wasser,1 Gew.% Kalk und 9 Gew.% thermisch aktivierten Ton hergestellt. Mittels konventioneller diskontinuierlicher oder kontinuierlicher Technik wird die Suspension mit Luft beaufschlagt, so dass bei einem Feststoffgehalt von ca. 25 % eine spezifische Dichte von 190 bis 250 kg/m³ erzielt wird. In diese leichte Suspension werden 15 Gew.% Holzfasern eingemischt. An Stelle der Holzfasern können auch teilmineralisierte Holzfasern in Form von Xylit oder eine Mischung aus Holzfasern und teilmineralisierten Holzfasern verwendet werden.

Das entstandene Stoffgemisch wird auf Blechen zu Platten oder zu einem endlosen Band definierter Abmessung geformt.

Die Fixierung der Struktur erfolgt durch thermische Behandlung.

Diese erfolgt in einem ersten Abschnitt in einer gesättigten Dampfatmosphäre (Taupunkt ca.100 °C) bzw. unter Sattdampf, bei einer Temperatur von 140 bis 240 °C einer Dauer von ca. 60 bis 120 min. In einem zweiten Schritt wird in einer relativ trockenen Atmosphäre (Taupunkt ca. 80 °C) bei einer Temperatur von 80 bis 200 °C der Verbundwerkstoff bis auf einen Feuchteanteil von 15 bis 2 % getrocknet. Nach dem Abkühlen werden Platten auf so zugeschnitten, dass eine Platte mit den Abmessungen 1845 mm x 720 mm entsteht. Mittels Breitbandschleifmaschine wird eine Plattendicke wahlweise von 11 mm, 17 mm oder eine anderen Stärke eingestellt.

Mit der Abarbeitung der Oberflächenkruste entsteht eine offenporige Struktur mit guten schalldämmenden Eigenschaften.

### Beispiel 4

Es wird eine weitere Schalldämmplatte gemäß Beispiel 3 mit veränderter Rezeptur hergestellt, die sehr gute Biegefestigkeitswerte aufweist:

| **Glycerin/Ziegelmehl** | | | |
|---|---|---|---|
| Arbeitsschritte | Rohstoffe | kg | Gew.% |
| Suspensierung | Wasser | 125 | 43,30 |
| | Glycerin | 31 | 10,74 |
| | Kalk | 0,7 | 0,24 |
| | Mehl | 50 | 17,32 |
| Verschäumen | | | |
| Mischen | Fasern | 35 | 12,12 |
| | Ziegelmehl (Ø 1-3 mm) | 47 | 16,28 |
| | | 288,7 | 100,00 |
| Ausformen | | | |
| Trocknen | | | |
| Formatieren einschließlich Abarbeiten der Oberflächenkruste | | | |
| In Tür einbauen | | | |

### Beispiel 5

Es wird eine weitere Schalldämmplatte gemäß Beispiel 3 mit veränderter Rezeptur hergestellt, die sehr gute Schalldämmeigenschaften aufweist:

| **Gummi** | | | |
|---|---|---|---|
| Arbeitsschritte | Rohstoffe | kg | Gew.% |
| Suspensierung | Wasser | 125 | 47,57 |
| | Kieselgur | 5 | 1,90 |
| | Kalk | 0,75 | 0,29 |
| | Mehl | 50 | 19,03 |
| Verschäumen | | | |
| Mischen | Fasern | 35 | 13,32 |
| | Gummi (Ø 1-3 mm) | 47 | 17,89 |
| | | 262,75 | 100,00 |
| Ausformen | | | |
| Trocknen | | | |
| Formatieren einschließlich Abarbeiten der Oberflächenkruste | | | |
| In Tür einbauen | | | |

### Beispiel 6

Es wird eine weitere Schalldämmplatte gemäß Beispiel 3 mit veränderter Rezeptur hergestellt, wobei die Suspension ausgezeichnete Verschäumungseigenschaften aufweist und die Platte neben der sehr guten Schalldämmung eine hervorragende Biegefestigkeit besitzt:

| **Glycerin/Mehl VC-1** | | | |
|---|---|---|---|
| Arbeitsschritte | Rohstoffe | kg | Gew.% |
| Suspensierung | Wasser | 125 | 53,72 |
| | Glycerin | 31 | 13,32 |
| | Kalk | 0,7 | 0,30 |
| | Mehl VC-1 | 31 | 13,32 |
| Verschäumen | | | |
| Mischen | Fasern | 45 | 19,34 |
| | | 232,7 | 100,00 |
| Ausformen Trocknen | | | |
| Formatieren einschließlich Abarbeiten der Oberflächenkruste | | | |
| In Tür einbauen | | | |

### Beispiel 7

Es wird eine weitere Schalldämmplatte mit veränderter Rezeptur hergestellt, wobei die Suspension aus Roggenmehl, Glycerin, Wasser und Kreide ohne verschäumt zu werden, mit den Fasern vermischt wird und zu Materialien mit sehr guten Schalldämmeigenschaften führt. Die Lockerung erfolgt durch das Verdampfen des im Material vorhandenen Wassers, wodurch ebenfalls eine offenporige Struktur des getrockneten Schalldämmmaterials erzielt wird.

| Arbeitsschritt | Rohstoff | Gew.% |
|---|---|---|
| Suspensierung | Wasser | 40 |
| | Kreide | 15 |
| | Mehl | 25 |
| | Glyzerin | 20 |
| | Suspension | 100 |
| | | |
| Mischen | Suspension | 88 |
| | Fasern | 12 |
| | Rohmasse | 100 |
| Ausformen | | |
| Trocknen | | |
| Formatieren einschließlich Abarbeiten der Oberflächenkruste | | |
| In Tür einbauen | | |

## Patentansprüche

1. Geformtes Schalldämmmaterial, enthaltend proteinhaltige, verschäumte Biopolymere, Pflanzenfasern oder teilmineralisierte Pflanzenfasern und Zuschlagsstoffe,
**dadurch gekennzeichnet, dass**
die Formkörper sowohl im Randbereich als auch im Inneren eine offenporige Struktur aufweisen.

2. Geformtes Schalldämmmaterial nach Anspruch 1,
**dadurch gekennzeichnet, dass**
mehrwertige, mit Wasser mischbare, einen Siedepunkt von über 150°C aufweisende Alkohole enthalten sind.

3. Geformtes Schalldämmmaterial nach Anspruch 1 oder 2,
**dadurch gekennzeichnet, dass**
Glycerin enthalten ist.

4. Geformtes Schalldämmmaterial nach Anspruch 1 bis 3,
**dadurch gekennzeichnet, dass**
grobkörnige synthetische oder natürliche Zuschlagsstoffe enthalten sind, wobei die Hauptmenge eine Korngröße von ca. 0,5 bis 3 mm aufweist.

5. Geformtes Schalldämmmaterial nach einem der Ansprüche 1 bis 4,
**dadurch gekennzeichnet, dass**
proteinhaltiges, verschäumtes Biopolymer auf der Basis von Getreidemehlen wie Roggenmehl mit einer Korngröße unter 0,5 mm enthalten ist.

6. Geformtes Schalldämmmaterial nach einem der Ansprüche 1 bis 5,
**dadurch gekennzeichnet, dass**
als Pflanzenfasern Fasern aus Holz, Hanf, Leinen, Palmenblättern, Schilf, Flachs oder Xylit als teilmineralisierte Pflanzenfaser enthalten sind.

7. Geformtes Schalldämmmaterial nach einem der Ansprüche 1 bis 6,
**dadurch gekennzeichnet, dass**
als feinkörnige anorganische Zuschlagsstoffe mit Korngrößen unter 0,5 mm wie Kalke, Kreide, Silikate, thermisch aktivierte Tone, Ziegelmehl oder Kaolin enthalten sind.

8. Geformtes Schalldämmmaterial nach einem der Ansprüche 1 bis 7,
**dadurch gekennzeichnet, dass**
als grobkörnige synthetische oder natürliche Zuschlagsstoffe Kork oder Elastomere enthalten sind.

9. Geformtes Schalldämmmaterial nach einem der Ansprüche 1 bis 8,
**dadurch gekennzeichnet, dass**
a. 15 bis 70 Gew.% proteinhaltige, verschäumte Biopolymere,
b. 10 bis 50 Gew.% Pflanzenfasern oder teilmineralisierte Pflanzenfasern,
c. 1 bis 30 Gew.% feinkörnige anorganische Zuschlagsstoffe,
d. 1 bis 70 Gew.% grobkörnige synthetische oder natürliche Zuschlagsstoffe
enthalten sind.

10. Geformtes Schalldämmmaterial nach einem der Ansprüche 1 bis 9,
**dadurch gekennzeichnet, dass**
5 bis 60 Gew.% mehrwertige, mit Wasser mischbare, einen Siedepunkt von über 150°C aufweisende Alkohole enthalten sind.

11. Geschäumtes Schalldämmmaterial nach einem der Ansprüche 1 bis 10,
**dadurch gekennzeichnet, dass**
5 bis 60 Gew.% Glycerin enthalten ist.

12. Verfahren zur Herstellung von Schalldämmmaterialien gemäß Anspruch 1,
wobei eine wässrige Suspension, enthaltend proteinhaltige, verschäumbare Biopolymere und feinkörnige anorganische Zuschlagsstoffe, hergestellt wird,
diese Suspension verschäumt wird,
Pflanzenfasern zugemischt werden,
diese Masse geformt, getrocknet und anschließend die Oberflächenkruste mechanisch entfernt wird.

13. Verfahren nach Anspruch 12,
**dadurch gekennzeichnet, dass**
vor der Formung und Trocknung grobkörnige, synthetische oder natürliche Zuschlagsstoffe zugemischt werden.

14. Verfahren nach Anspruch 12 oder 13,
**dadurch gekennzeichnet, dass**
der wässrigen Suspension mehrwertige, mit Wasser mischbare, einen Siedepunkt von über 150°C aufweisende Alkohole zugesetzt werden.

15. Verfahren nach einem der Ansprüche 12 bis 14,
**dadurch gekennzeichnet, dass**
die nach dem Trocknungsvorgang durchgeführte mechanische Oberflächenbehandlung zur Herstellung einer offenporigen Struktur durchgeführt wird.

16. Verfahren nach einem der Ansprüche 12 bis 15,
**dadurch gekennzeichnet, dass**
die sich nach dem Trocknungsvorgang bildende Oberflächenkruste entfernt wird.

17. Verfahren nach einem der Ansprüche 12 bis 16,
**dadurch gekennzeichnet, dass**
die Suspension nicht verschäumt wird.

18. Verwendung des Schalldämmmaterials gemäß Anspruch 1 als Schalldämmplatte zum Einbau in Türen und Wänden, zur Trittschalldämmung, zur Maschinendämmung und als Möbelplatte.
